# EUROPEAN PATENT APPLICATION

(11) **EP 1 533 728 A1**
(43) Date of publication of application: **25.05.2005**
(21) Application number: 03292874.9
(22) Date of filing: 19.11.2003
(51) Int. Cl.: G06F 17/60

(54) **Contract generating server**

(71) Applicant: ALCATEL, 75008 Paris (FR)
(72) Inventor: Hägebarth, Frank, 74366 Kirchheim (DE)
(74) Representative: Zinsinger, Norbert

(57) **Abstract**

The invention concerns a contract server and a method for supporting an e-commerce contract arrangement between a vendor and a customer (61, 62, 63), wherein a terminal (51, 52, 53) assigned to the customer and a merchant server (31, 32, 33) assigned to the vendor exchange data for negotiating terms of such contract. The merchant server (31, 32, 33) transfers contract data specifying a set of contract terms of a contract to a third party's contract server (4). The contract server (4) generates a contract text specifying a contract that corresponds with the received contract data. Then, it transmits the contract text via a communication network 1 to a terminal (51, 52, 53) of the customer. The contract server executes an authentication procedure for authenticating the customer. If the contract server (4) receives a confirmation regarding the contract text from an authenticated customer, it stores the contract items as signed contract items.

## Description

The present invention relates to a method and a contract server for supporting an e-commerce contact arrangement between a vendor and a customer, wherein a terminal assigned to the customer and a merchant server assigned to the vendor exchange data for negotiating terms of such contract.

The sales and distribution of goods and services via a telephone network is of growing importance. Mail order houses, direct insurance's, and service providers of different branches provide call-centers which makes it possible for the clients to order via a telephone. When ordering goods or services via telephone, it is not easy to prove the conclusion of the contract between the vendor and the customer. To prevent this problem, a written contract is submitted to the customer via postal mail, signed by the customer and re-send to the vendor.

Further, WO 01/86538 A1 discloses a mobile commerce system. By e-commerce means, the user places an order with a vendor and makes electronic payment. A merchants server generates a signed contract which may contain the following attributes: customer name, customer address, customer e-mail, number of the mobile phone, credit card number and expiration day, merchant name and ID number, merchant address, merchant e-mail, date and time of contract, contract ID, delivery place, earliest delivery date and time, latest delivery date and time. This signed contract is sent to an trusted third party receipt server. The trusted third party receipt server generates an electronic, digital receipt which is sent to the vendor. The vendor forwards the receipt to the mobile terminal of the customer and the mobile terminal stores the receipt for subsequent presentation at the point of delivery for ordering goods or services. When the receipt is presented at the delivery entity, the delivery entity sends the receipt to the trusted third party receipt server. This server checks the validity of the receipt and sends back a validated and verified specification of goods or services to the delivery entity.

Within existing e-business methods, an internet user might first contact to a vendors WEB server for selecting goods or an item and can pay electronically afterwards. The payment can be performed by means of a credit card or by a so-called electronic micropayment. Effecting said payment, a contract is implicitly concluded.

It is an object of the present invention to improve the e-commerce based contract arrangement between a vendor and a customer.

The object of the present invention is achieved by a method for supporting an e-commerce based contract arrangement between a vendor and a customer, wherein a terminal assigned to the customer and a merchant server assigned to the vendor exchange data for negotiating terms of such contract, the merchant server transfers contract data specifying a set of contract terms of a contract to a third party's contract server, the contract server generates a contract text specifying a contract that corresponds with the received contract data, the contract server transmits the contract text via a communication network to a terminal of the customer, the contract server executes an authentication procedure for authenticating the customer, the terminal transmits a confirmation regarding the contract text back to the contract server and the contract server stores the contract items as signed contract items, if the contract server receives said confirmation from an authenticated customer. The object of the present invention is further achieved by a contract server for supporting an e-commerce based contract arrangement between the vendor and the customer, wherein the contract server comprises a storage unit for storing items of a signed contract and a control unit for: receiving contract data specifying a set of contract terms of a contract from a third party's merchant server; generating a contract text specifying a contract that corresponds with the received contract data; transmitting the contract text via a communication network to a terminal of the customer; executing an authentication procedure for authenticating the customer; and storing the contract items as signed contract items, if the contract server receives a confirmation regarding the contract text from an authenticated customer via the terminal.

The invention is based on the idea to provide a trusted contract service in between the customer and the vendor. After a negotiation between customer and vendor, the vendor requests a contract service to send a certain contract text to the customer. Having receipt a confirmation of the contract from an authenticated customer, the contract server provides said "signed" contract to the involved party's.

The invention improves the security of an e-commerce based contract arrangement between a vendor and a customer. It overcomes the problem that the customer needs to trust the vendor. A fraudulent vendor might falsify the received payment information and might give wrong goods/service information. The contract server according to the invention prevents such fraudulent behavior of the vendor and protects the customer against manipulation of the signed contract. Further, the contract server reduces the complexity and the technical efforts which have to be invested for the provision for an e-commerce based contract arrangement. For example, the generation of the contract text, the customer authentication and the contract administration has not to be implemented for each specific merchant service. This makes the implementation of new merchant services cheaper, increases the flexibility of merchant service creation and drastically reduces the overall costs of an e-commerce system, since the contract server may be accessed by a plurality of merchant servers.

Further, the invention can easily be implemented in existing call-center environments.

Further advantages are achieved by the embodiments indicated by the dependent claims.

According to a preferred embodiment of the invention, the contract data contains a set of term identifiers, wherein each of the term identifiers represents a specific contract item prearranged between the merchant server and the contract server and pre-stored in the contract server. Thereby, the amount of data which has to be exchanged between the merchant server and the contract server is heavily reduced. For example, a set of individual, term specific voice announcements is recorded by the contract server.

A user friendly submission of the contract text to the customer is provided by following implementation: The contract server generates a voice announcement as contract text and issues said voice announcement to the customer via the terminal. Further, this makes it possible for the customer to execute an e-commerce based contract arrangement using a simple terminal, for example a PSTN-phone (PSTN = Public Switched Telecommunication Network).

Further, the use of a telephone network for the communication between the terminal and the contract server enables the implementation of a simple and secured authentication procedure. The terminal transmits the confirmation regarding the contract text back to the contract server via such a telephone network, in particular via a mobile communication network. The contract server determines the telephone number assigned to this terminal and executes the authentication procedure by means of the determined telephone number.

Further advantages are achieved, if the contract server assigns a contract reference to the stored contract items and submits this contract reference to the merchant server and/or to the terminal. This makes it easier for the vendor and/or customer to relate and access the signed contract lateron.

Further, it is possible that the contract server issues, as certification of the stored signed contract items to the customer and/or merchant server or provides, e.g. via an IN-service, access to stored contract items. The contract server administrates the contracts for both, for the customer and for the vendor. Therefore, it is no longer necessary for the vendor and/or customer to file and administrate the contracts by themselves.

Preferably, the contract server is an IN server. This enables a fast, powerful, secure and user friendly implementation of the invention.

Preferably, the contract server comprises a billing unit for billing the storage of signed contract items and/or the issuance of certifications regarding stored contract items. This improves the attraction for third party's to support e-commerce based contract arrangements by a contract server infrastructure.

These as well as other features and advantages of the invention will be better appreciated by reading the following detailed description of presently preferred exemplary embodiments taken in conjunction with accompanying drawings of which:
- Fig. 1: is a block diagram of an e-commerce system with a contract server according to the invention.
- Fig. 2: is a functional view showing a terminal, a merchant server and the contract server of Fig. 1.

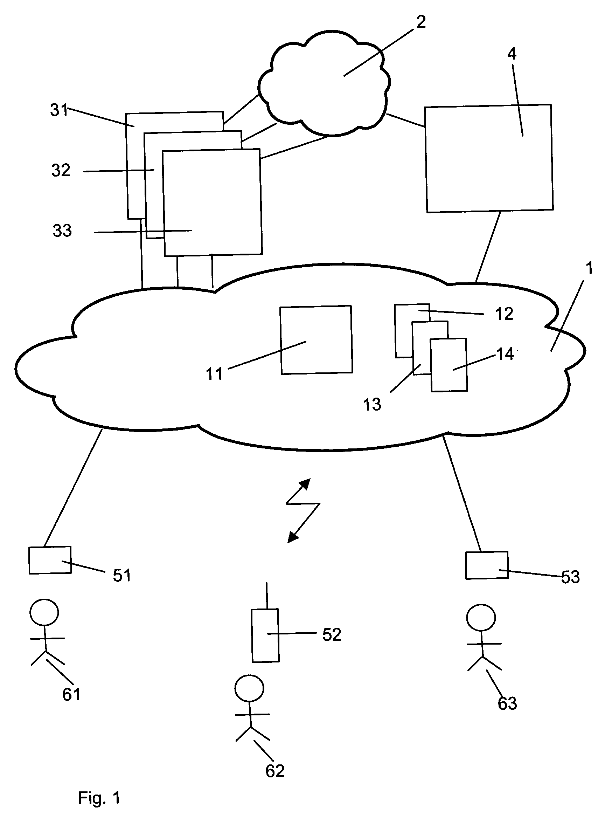

Fig. 1 shows a communication network 1, several terminals 51, 52 and 53, several customers 61, 62 and 63, a contract server 4, several merchant servers 31, 32 and 33 and a communication network 2. The terminals 51, 52 and 53 are assigned to customers 61, 62 and 63, respectively.

The communication network 1 is a telephone network, for example a PSTN or ISDN network (PSTN = Public Switched Telephone Network; ISDN = Integrated Service of Digit Network). Further, it is possible that the communication network 1 is a mobile communication network, for example a cellular phone network as a GSM network or a UMTS network (GSM = Global System for Mobile Communication; UMTS = Universal Mobile Telecommunications System). Accordingly, the communication network 1 may be formed by several interlinked physical networks, for example a fixed communication network and a mobile communication network, which can be assigned to different network operators.

Exemplary, Fig. 1 shows several elements of the communication network 1 which supports the provisioning of IN services within the communication network 1. It shows an exchange 11 that provides a service switching functionality. Further, it shows several intelligent peripherals 12, 13 and 14 supporting the provisioning of voice announcements for IN services.

The communication network 2 is a data network for exchanging data between the merchant servers 31, 32 and 33 and the contract server 4. For example, the communication network 2 is an IP network which enables a communication between the merchant servers 31, 32 and 33 and the contract server 4 through a TCP-IP protocol stack (IP = Internet Protocol; TCP = Transport Control Protocol). But, it is also possible that the communication network 2 is part of the communication network 1. For example, the merchant servers 31 to 33 and the contract server 4 exchange data via the number 7 signaling protocol.

According to a preferred embodiment of the invention, the merchant servers 31 to 33 and the contract server 4 provides the services within the communication network 1 based on the IN service architecture or another kind of telecommunications service architecture, for example PARLEY.

The merchant servers 31 to 33 respectively provide an e-commerce service within the communication network 1. Each of the merchant srver 31 to 33 is associated with a specific vendor. For example, the server 31 is a call center for communicating with the customers 61 to 63. The merchant server 31 distributes incoming calls to agents, collect data entered by the agent, establishes contract data and controls the execution of conducted contracts.

Further, it is possible that the merchant server 31 provides information about the offered goods and services via a web-based interface to the customers 61 to 63.

Further, the merchant server 31 can comprise voice announcement and voice recognition means for automatically exchanging data with the customers 61 to 63 and directly negotiating terms of such contract without involving a call agent.

Further, it is possible that the merchant server 31 is an IN service providing the aforementioned functionalities.

The terminals 51 and 53 are phones connected via a subscriber line with the communication network 1. The terminal 52 is a mobile phone, for example a GSM phone, connected with the communication network 1 via a radio interface.

For concluding a contract with respect to the specific goods and services offered by one of the merchant servers 31 to 33, the customer 61 calls the service number associated to the respective merchant server.

For example, the customer 61 calls a merchant server 32. A communication connection is established between the terminal 51 and the merchant server 32. Via exchanging voice data, the terms of such contract negotiated between the customer 61 and the merchant server 32.

Then, the merchant server 32 transfers contract data specifying a set of contract terms of the contract via the communication network 2 to the contract server 4 assigned to a third party. For example, this set of contract terms specify specific goods or services, the price for it, discounts and so on. Further, the merchant server 32 initiates a call forwarding that replaces the communication connection between the terminal 51 and the merchant server 32 by a communication connection between the terminal 51 and the contract server 4.

For example, the call between the terminal 51 and the merchant server 32 is handled by the exchange 11, which is an IN service switching point (SSP). The server 32 sends an INAP message (INAP = Intelligent Network Application Protocol) to the exchange 11, which initiates the redirection of the call to the contract server 4.

The contract server 4 generates a contract text specifying a contract that corresponds with the contract data received from the merchant server 32. The contract server 4 generates a voice announcement containing the content of this contract. Then, it issues this voice announcement to the customer via the communication connection established between the terminal 51 and the contract server 4. For generating this voice announcement, the contract server 4 sends control messages to the intelligent peripheral 12. The intelligent peripheral 12 builds up the voice announcement out of a set of prerecorded basic voice announcements. It plays back these announcements and transmits the corresponding voice data via the established communication connection to the terminal 51.

But, it is also possible that the contract server 4 plays back the generated voice announcement and generates the voice announcement without any interaction with intelligent peripherals.

Further, the contract server 4 executes an authentication procedure for authenticating the customer 61. For this authentication procedure, it determines the telephone number assigned to the terminal 51. Further, it might request from the customer 61 to enter a PIN code (PIN = Personal Identification Code) and checks, whether the received PIN code correlates to the telephone number of the terminal 51. Further, the authentication procedure may base on encryption keys or TAN codes (TAN = Transaction Number) used by the terminal 51 or the customer 61 to authenticate himself towards the contract server 4.

For acceptance of the contract, the terminal 51 sends a confirmation regarding the contract text back to the contract server 4. If the authentication of the customer 41 was successful, the contract server 4 stores the contract items as signed contract items as soon as it receives this confirmation from the terminal 51.

Further, it is possible to implement the invention within an internet based e-commerce system. For such embodiment, the communication network 1 is constituted by an IP network (IP = Internet Protocol). Such IP network is constituted by several physical networks interconnected via a common level 3 IP protocol. The merchants server 31 to 33 are WEB-based servers communicating with the customers 61 to 63 through a WEB-based browser. The terminals 51 to 53 are computers containing a communication device for communicating via an IP network and a WEB-browser for accessing the data provided by the merchant servers 31 to 33 and the contract server 4. The contract server 4 may issue the contract text in written or in oral form dependent on the selection of the customer and/or the constraints of the terminal used by the customer. Preferably, the communications between the terminals 51 to 53 and the merchant servers 31 to 33, between the merchant servers 31 to 33 and the contract server 4, and the merchant servers 31 to 33 and the terminals 51 to 53 are encrypted to protect the privacy of the customers 61 to 63.

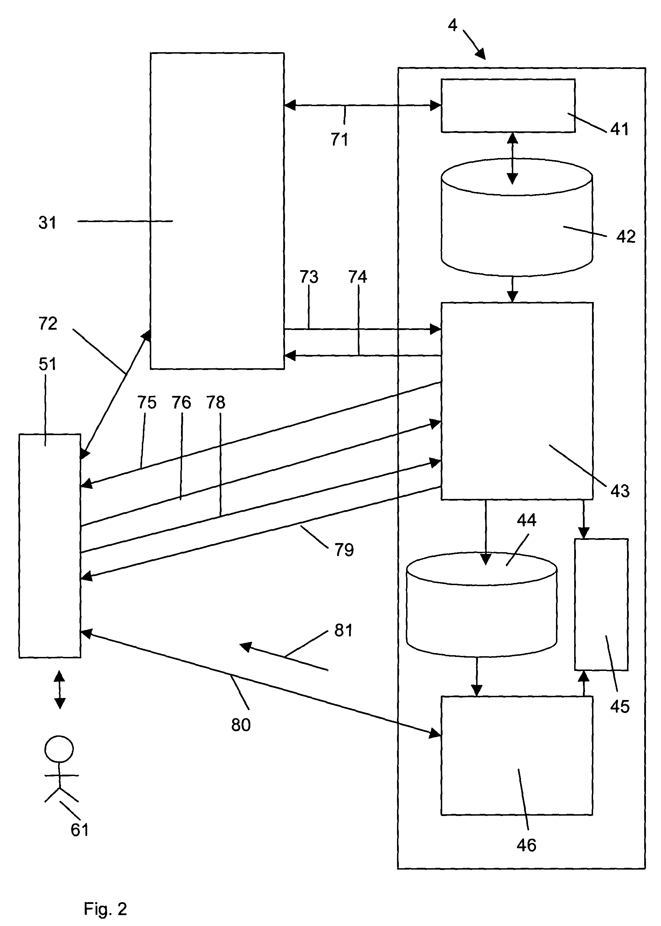

In the following, a detailed embodiment of the invention is clarified by hand of Fig. 2.

Fig. 2 shows the terminal 51, a merchant server 31 and the contract server 4.

The contract server 4 is constituted by one or several interconnected computers, a software platform and application programs executed on the system platform formed by the aforementioned hardware and software platform. The functionlities of the contract server 4 are provided by the execution of these software components by the hardware platform of the contract server 4. From functional point of view, the contract server 4 comprises several control units 41, 43, 45, 46 and two storage units 42 and 44.

The control unit 41 administrates sets of contract items prearranged between the contract server 4 and the merchant server 31 and stored in the storage unit 42.

For example, the storage unit 42 contains for each of the merchant servers interworking with the contract server 4 such set of contract items. Each set of contract items may comprise a plurality of basic and supplementary contract items. A term identifier is assigned to each of these contract items. A contract item may be constituted by a data set containing a written text or voice data specifying a voice announcement of a correspondent content. Further, both kind of data may be included in the data set. Voice data may be stored in a compressed form or represent input code of a text to speach converter.

The control unit 41 provides an access interface towards the merchant servers 31, 32 and 33, which makes it possible for such server to prearrange contract terms with the contract server 4. Via this access interface, the merchant server 31 to 33 transmits contract terms and a signed term identifier to the contract server 4. The control unit 41 verifies the authentication and authorization of the respective merchant server and stores the received data within the storage unit 42. Further, it is possible that the control unit 41 compresses this data and stores them in a compressed format within the storage unit 42.

According to a further embodiment of the invention, the control unit 41 provides an IN service number which could be contacted by a representative of the vendor. The control unit 41 records speach announcements spoken by this representative. Thereby, it becomes possible that the speach announcements generated by the contract server 4 have the individual touch desired by the respective vendor.

The control unit 43 is responsible for generating the contract text and for storing signed contract items.

The merchant server 31 and the terminal 51 exchanged data 72 for negotiating terms of a contract between the customer 61 and the vendor which is represented by the merchant server 31. Based on this exchange of data, the merchant server 31 creates a set of contract data that specifies contract terms of a contract which should be concluded between the customer 61 and the vendor. For example, the contract data specifies the respective goods and/or services, the price, discounts, general and specific contract regulations. Preferably, all of this contract items are specified within the contract data by means of term identifiers which points to contract items pre-stored in the storage unit 42. But, it is also possible that a part or all of the contract items are not specified by means of a term identifier, but detailed described within the contract data.

Further, it is possible that not all of the necessary contract terms are already specified within the contract data and that missing contract terms are negotiated between the contract server 4 and the terminal 51.

The created contract data are transmitted as part of a message 73 to the contract server 4. Preferably, an authorization and authentication procedure is executed between the merchant server 31 and the control unit 43, before the contract data is accepted by the control unit 43. Such authorization and/or authentication result is logged within the storage unit 44 to document the approval of the merchant server 31.

The control unit 43 generates a contract text specifying a contract that corresponds with received contract data. It accesses the storage unit 42 and builds up the contract text by help of the pre-stored contract items of the storage unit 42. The control unit 43 transmits the generated contract text as contract text 75 to the terminal 51. The contract text may be encoded as voice data or as written text, which is for example displayed by the display of the terminal 51.

After transmission of the contract text, the control unit 43 requests the customer 61 to enter his PIN code and a TAN code, which are transmitted as part of a message 76 to the control unit 43. The control unit 43 executes by help of this data an authentication procedure to verify the identity of the customer 61.

If the terminal 51 is a mobile terminal, it is possible to verify the identity of the customer 61 by solely determining the telephone number assigned to the terminal 51. In case of a mobile terminal, the customer 61 has to identify himself vice versa the mobile terminal 51 by entering a PIN code when requesting access to the mobile communication network.

Further, the terminal 51 sends a confirmation message 78 to the control unit 43, when receiving a corresponding response from the customer 61. The confirmation message 78 gives a confirmation of the customer 61 regarding the contract text outputted by the terminal 51.

It is possible that the confirmation message 78 does already contain the PIN code and the TAN code so it is no longer necessary to send the message 76 to the control unit 43.

If the control unit 43 receives the confirmation message 78 and has verified the authentication of the customer 61, it stores the contract data as signed contract data in the storage unit 24. Further, it assigns a contract reference to the stored contract items and submit this contract reference within a message 79 and a message 74 to the terminal 51 and the merchant server 31, respectively. In addition, it gives a notification to the control unit 45.

The control unit 46 provides contract information stored in the storage unit 44 to customers and to merchant servers. For example, the control unit 46 may be accessed via an IN service number. But, it is also possible to access the control unit 46 via a web-based interface.

For example, a customer or a merchant server accesses the control unit 46 by means of the contract reference assigned to a specific contract. The control unit 46 verifies whether the submitted contract reference fits with an existing signed contract stored in the storage unit 44 and with the identity of the customer or the merchant server. If this check is positive, it submits the respective contract data. Further, it is possible to access this data by help of other data, for example the name of a contract person, the date of the contract person, the price, the goods/services or combination of this data. The control unit 46 supports an accessing customer or merchant server to identify the correspondent contract or contracts and gives access to the contract data, if the accessing customer and/or merchant server is a contract party of the selected contract.

For example, the customer 61 calls the service number assigned to the control unit 46. A communication connection 80 is established through the communication network 1. Via voice announcement, the control unit 46 requests to send an identification of the contract which shall be accessed. After having identified this contract by help of the above-described data, the control unit 46 resends contract data 81, for example the contract text submitted as contract text 75. Further, a notification is given to the control unit 45.

The control unit 45 is a billing unit, which is responsible for billing of the services provided by the contract server 4. Each time, a contract is stored as signed contract within the storage unit 44, it bills the assigned vendor for the provided contracted certification service. Each time, the control unit 46 is using a contract certification or sending contract data to a terminal or a merchant server, it bills the subscriber of this terminal or the respective merchant server for the submission of a contract copy. Preferably, the control unit 45 bills the customer 61 to 63 and the vendors by help of the billing system of the communication network 1.

## Claims

1. A method for supporting a e-commerce based contract arrangement between a vendor and a customer (61, 62, 63), wherein a terminal (51, 52, 53) assigned to the customer and a merchant server (31, 32, 33) assigned to the vendor exchange data for negotiating terms of such contract,
**characterized in**
**that** the method comprises the steps of
transferring by the merchant server (31), contract data (73) specifying a set of contract terms of a contract to a third parties contract server (4); generating, in the contract server (4), a contract text specifying a contract that corresponds with the received contract data (73);
transmitting, by the contract server (4), the contract text (75) via a communication network (1) to a terminal (51) of the customer (61); executing, by the contract server (4), an authentication procedure for authentifying the customer (61);
transmitting, by the terminal (51), a confirmation (78) regarding the contract text back to the contract server (4); and
storing, by the contract server (4), the contract items as signed contract items, if the contract server (4) receives said confirmation (78) from an authenticated customer (61).

2. The method of claim 1,
**characterized in**
**that** the contract data (73) contains a set of term identifiers, each of the term identifiers representing a specific contract item prearranged between the merchant server (31) and the contract server (4) and prestored in the contract server (4).

3. The method of claim 1,
**characterized in**
**that** the method comprises the steps of generating, in the contract server (4), a voice announcement as contract text and issuing said voice announcement to the customer (61) via the terminal (51).

4. The method of claim 1,
**characterized in**
**that** the method comprises the steps of:
transmitting the confirmation (78) regarding the contract text back to the contract server (4) via a telephone network (1), in particular via a mobile communication network; determining the telephone number assigned to the terminal (51); and executing the authentisation procedure by means of the determined telephone number.

5. The method of claim 1,
**characterized in**
**that** the method comprises the further step of assigning a contract reference to the stored contract items and submitting the contract reference to the merchant sever (31) and/or to the terminal (51).

6. The method of claim 1,
**characterized in**
**that** the method comprises the further step of issuing, by the contract server (4), a certification of the stored signed contract items to the customer (61) and/or merchant server (31).

7. The method of claim 1,
**characterized in**
**that** the method comprises the further step of providing, via an IN service, access to stored contract items.

8. A contract server (4) for supporting an e-commerce based contract arrangement between a vendor and a customer (61, 62, 63), wherein a terminal (51, 52, 53) assigned to the customer (61) and a merchant server (31) assigned to the vendor exchange data for negotiating terms of such contract,
**characterized in**
**that** the contract server (4) comprises a storage unit (44) for storing items of a signed contract and a control unit for: receiving contract data (73) specifying a set of contract terms of a contract from a third party's merchant server (31, 32, 33); generating a contract text specifying a contract that corresponds with the received contract data; transmitting the contract text (75) via a communication network (1) to a terminal (51) of the customer (61); executing an authentication procedure for authenticating the customer (61); and storing, by the contract server (4), the contract items as signed contract items, if the contract server (4) receives a confirmation (78) regarding the contract text form an authenticated customer (61) via the terminal (51).

9. The contract server of claim 8,
**characterized in**
**that** the contract server (4) is an IN server.

10. The contract server of claim 8,
**characterized in**
**that** the contract server (4) comprises a billing unit (45) for billing the storage of signed contact items and/or the issuance of certifications regarding stored contract items.
